Europäisches Patentamt

**European Patent Office**

**Office européen des brevets**

(11) Publication number: **0 239 884 B1**

# EUROPEAN PATENT SPECIFICATION

(45) Date of publication of patent specification: **29.09.93**   (51) Int. Cl.⁵: **G09B 5/06**

(21) Application number: **87104082.0**

(22) Date of filing: **20.03.87**

(54) **Interactive video composition and presentation systems.**

(30) Priority: **04.04.86 US 848171**

(43) Date of publication of application:
**07.10.87 Bulletin  87/41**

(45) Publication of the grant of the patent:
**29.09.93 Bulletin  93/39**

(84) Designated Contracting States:
**DE FR GB IT**

(56) References cited:
**DE-A- 3 413 529**

**PROCEEDINGS OF THE IFIP 9TH WORLD COMPUTER CONGRESS, 19th - 23rd September 1983, Paris, FR, pages 839-845, edited by R.E.A. MASON, Elsevier Science Publishers B.V. (North-Holland), Amsterdam, NL; M. SZABO et al.: "An assessment of the state of the art of computer based learning systems design"**

**1985 FRONTIERS IN EDUCATION CONFERENCE PROCEEDINGS, 19th - 22nd October 1985, Golden, Colorado, US, pages 265-272, edited by L.P. Grayson; P.G. BARKER et al.: "An approach to multi-media authoring"**

(73) Proprietor: **International Business Machines Corporation**
**Old Orchard Road**
**Armonk, N.Y. 10504(US)**

(72) Inventor: **Ruthefoord, Charles Thomas**
**2470 King Arthur Circle**
**Atlanta Georgia 30345(US)**
Inventor: **Frank, Nancy S.**
**6395 Black Water Trail**
**N.W. Sandy Springs, GA 30328(US)**

(74) Representative: **Tubiana, Max**
**Compagnie IBM France Département de Propriété Intellectuelle**
**F-06610 La Gaude (FR)**

**Description**

The present invention generally relates to an information providing system and, more particularly, to an interactive multi-media presentation system and a method for developing the presentation. The invention has broad application in the area of user interactive information systems such as, but not limited to, computer aided education. The invention facilitates the presentation of all manner of information which may be useful in various business contexts including sales, training and the like.

Description of the Prior Art

Interactive video training has become important as an effective technique in the field of computer aided education, see e.g. PROCEEDINGS OF THE IFIP 9TH WORLD COMPUTER CONGRESS, 19th - 23rd September 1983, Paris, FR, pages 839-845. A number of input technologies including keyboard, touch screen and light pen may be used to accept inputs and responses from a student user. Video disks are used to provide visual data in the form of graphics and animation to a display screen and audio signals to a speaker or speakers. A voice synthesizer may also be used to provide instructions and provide feedback to the student user on each answer. The programmed course of instruction may be designed to stop at any point to provide additional levels of instruction or even to repeat previous instruction as reinforcement depending on the student user's responses.

Interactive video training is but one aspect of a broader field of information presentation. Much the same techniques may be advantageously applied in other areas. For example, a sales presentation might be composed so that a prospective customer could use the presentation to determine what his needs were and how best to satisfy those needs. There are other areas where, for example, the need exists to provide the general public with information about a particular place or time in history or about an exhibit such as at a National Park or museum. Rather than the typical prerecorded tape which may be activated by an interested party, it would be desirable to provide an information system the user could tailor to his or her individual interests.

Creating the programs for interactive video training courses and, more generally, information presentation systems has been a difficult and time consuming task. In the past, interactive video presentations have been designed manually and then subsequently coded into a computer program by program developers. This process has made such presentations expensive and limited their number to those applications for which the cost could be justified.

SUMMARY OF THE INVENTION

It is therefore an object of the subject invention to provide a method for developing a computer aided video presentation which may be practiced by persons who are relatively inexperienced in the use of computers.

It is a further object of the invention to provide a composition system which facilitates the development of an interactive multi-media presentation.

The objects of the invention are attained by a program for specifying the execution of independent, multi-media tasks along a synchronizing time line, preferably in the form of a spreadsheet matrix with event elements making up the rows and the time periods, the columns. The media which may be used in the practice of the invention include various pieces of hardware such as touch screens, graphics displays, voice synthesizers, video disk players, keyboards, and light pens as described above. These devices correspond to the rows of the matrix. The activities of multiple independent devices are synchronized by having the columns of the matrix represent moments in time. Thus, all activities specified in one column appear to happen simultaneously, while activities specified in multiple columns appear to happen successively, moving from left to right in the matrix.

The matrix used in the practice of the invention is similar to the GNATT chart concept used in the field of project management to schedule the activities of men and machines across time.

In designing a presentation, the information provider types into a series of matrices indications of which devices will be operating in a desired sequence and for a specified period of time. In the context of the invention, each event is a filled-in spreadsheet matrix. Each spreadsheet matrix includes information indicating the next even. The next event may be the next event in sequence or it may be conditional on which input is made by a user. The input may be selected by the user in response to a prompt to choose from among several possible inpits which are presented. It is also possible, because of the time line in the spreadsheet matrix, to provide a default next event should the user fail to make a choice within a predetermined period of time. The default next event does not need to be one of the events that would have occurred had the user made a selection within the predetermined period of time. The control in each spreadsheet event is also specificable in all other events in the presentation, thereby allowing complex multi-media presentations to be designed by a user who is relatively unsophisticated in using computers. Thus, a single presentation may comprise hundreds or even thousands of filled-in spreadsheet events.

The program that permits the information provider to compose the presentation is referred to herein as the "composer". Once a presentation has been composed, the user for whom the information is intended may use the presentation by means of a second program referred to herein as the "conductor". The conductor is the run time program for the composer. The end user need only have a copy of the composed presentation and the conductor program in order use the system. Only the information provider needs to have both the composer and the conductor programs. Thus, in the context of a host computer with a plurality of terminals, the terminals assigned to the end users would not be able to access the composer program but a terminal assigned to the information provider would. In the case of a plurality of stand alone computers, the composer program does not need to be distributed to the end users. The end users need only receive the composed presentation and the conductor program.

The reason why the author of a presentation requires both the composer and conductor programs is to allow the author to test his presentation during the process of writing it. For example, after having written a sequence of events, the author would run the sequence using the conductor to see whether the information is presented in a manner which is satisfactory to him. If it is not, the author can return to the composer and edit the presentation. The composer supports several editing features including adding and deleting events, modifying events by the insertion or removal of columns to place forgotten event elements in the appropriate time sequence or remove superfluous event elements, and to change the sequence in which events are presented.

BRIEF DESCRIPTION OF THE DRAWINGS

The foregoing and other objects, aspects and advantages of the invention will be better understood from the following detailed description of a preferred embodiment of the invention with reference to the drawings, in which:

Figure 1 is a representation of a computer display screen showing the initial time-line used to author an event in a presentation according to the subject invention;

Figure 2 is a representation similar to Figure 1 showing a pop-up menu for the video segment of the time-line;

Figure 3 is a representation similar to Figure 1 showing the specification of a video still in the time-line;

Figure 4 is a representation similar to Figure 1 showing the pop-up graphics menu;

Figure 5 is a representation similar to Figure 4 but showing the fade and wipe pop-up menu selected from the graphics menu;

Figure 6 is a representation similar to Figure 4 but showing the move option pop-up menu partially overlaying the graphics menu;

Figure 7 is a representation similar to Figure 1 showing the pop-up menu for literals;

Figure 8 is a representation similar to Figure 1 showing the touch screen design option pop-up menu;

Figure 9 is a representation similar to Figure 1 showing the line 25 pop-up menu;

Figure 10 is a representation similar to Figure 9 but showing the line 25 pop-up option menu which lists additional video control options;

Figure 11 is a representation similar to Figure 1 showing the pop-upo menu for sound;

Figure 12 is a representation similar to Figure 11 but showing the pop-up word list;

Figure 13 is a representation similar to Figure 1 showing the pop-up menu for answer analysis;

Figure 14 is a representation similar to Figure 1 showing the pop up menu for the indicators;

Figure 15 is a representation similar to Figure 1 showing the pop-up menu for video disk loading and unloading; and

Figure 16 is a block diagram showing the overall structure of the conductor program according to the invention.

As mentioned, two separate computer programs are used to allow the information provider the ability to author information which can be displayed on the screen of a host connected computer terminal or a stand alone computer system. The first of these is the composer program which gives the information provider the ability to author or composate a presentation. A presentation is the information the end user sees and/or hears at the host connected computer terminal or stand alone computer system. The authoring process consists of the instructor using a time-line to control the media of the presentation. The media can consist of graphic frames, video disk frames and sound.

The second computer program is the run time program which will be referred to as the conductor. The conductor is the application that takes the information authored by the information provider using the composer and performs the functions indicated in the time-line of each event in the course of the presentation. In general, the conductor is the program that resides in the end user's computer terminal or stand alone computer system to present the information to the end user.

The author of a presentation has the capability to present to the end user moving video pictures, still video pictures, graphic frames, text, and sound from either a video disk or a speech synthesizer. With the flexibility of the hardware devices, it is possible for the author to use media mixing to produce a variety of visual and audio effects. The author can define more than one type of user input. The input can be, for example, touch points on a touch screen display and/or the keyboard. The author can direct a presentation based on the points touched by the user or make decisions based on variable data input from the keyboard.

Preparing a presentation begins by the author deciding what information is to be presented during the presentation. Once the information has been decided upon, the author then determines what type of media will be used to present the information. All video and sound required may be created and placed on a video disk. A map of what is on the video disk, both video and sound, is made to allow the author to easily locate any video or sound data that may be required at any point in the presentation. Any graphics that may be needed are made with an all points addressable (APA) or bit mapped frame creator and editor. Once all the information is available, the author can create an outline of how the presentation is run. This outline can be made using any text editor, and the routine should include information such as what graphics are to be displayed with what video and sound. Any input allowed and what decisions are to be made based on the input from the end user should also be included. Once this outline is made, it is used during the composer process as a guide for the author. From the outline, the author should be able to fill in the time-line provided during the composer process to perform the indicated steps of the presentation.

The hardware required to run the composer and conductor are a microcomputer such as the IBM Personal Computer (PC), PC/XT or PC/AT, a vision head, and a video disk player. It is not necessary that the composer and conductor use the same type of PC; however, whichever type of PC is used, it is required to have 512K bytes of memory, an Enhanced Graphics Adaptor (EGA), and a General Purpose Interface Bus (GPIB). The vision head is a hardware device that contains a medium resolution graphics display, a touch screen, two speakers, and a voice synthesizer chip, all of which technology is known in the art. The IBM PCs use a keyboard that has ten function keys labeled F1 to F10 and a combination numeric and cursor keypad. The arrow keys on this keypad can be used to position the cursor on the display screen; however, other cursor positioning devices such as a mouse, track ball, joy stick or the like can be used to position the cursor on the screen.

As mentioned, the composer refers to the authoring process which allows the author to create a presentation. There are several steps involved in creating a presentation, and each of these steps corresponds to an option on the composer menu, an example of which is shown below.

---

COMPOSER MENU

PRESENTATION = VISION

       1. AUTHOR PROFILE

       2. PRESENTATION PROFILE

       3. UPDATE OUTLINE

       4. AUTHOR an EVENT

       5. ERASE an EVENT

       6. TEST an EVENT

       7. DOCUMENT PRESENTATION

       9. RETURN TO MASTER MENU

SELECT ONE (.)

---

As can be seen from the menu, two profiles must be created, the author profile and the presentation profile. These profiles are used by the composer and the conductor to identify information about the author, the equipment being used and the functions available.

A time-line is used in the authoring process. The time-line is a type of spreadsheet which controls and synchronizes graphic frames, video disks, a touch screen, a voice syntheziser and other hardware connected to the system. One such spreadsheet is required for each event in the presentation. The spreadsheet is arranged in a matrix with event elements making up the rows and the time periods, the columns.

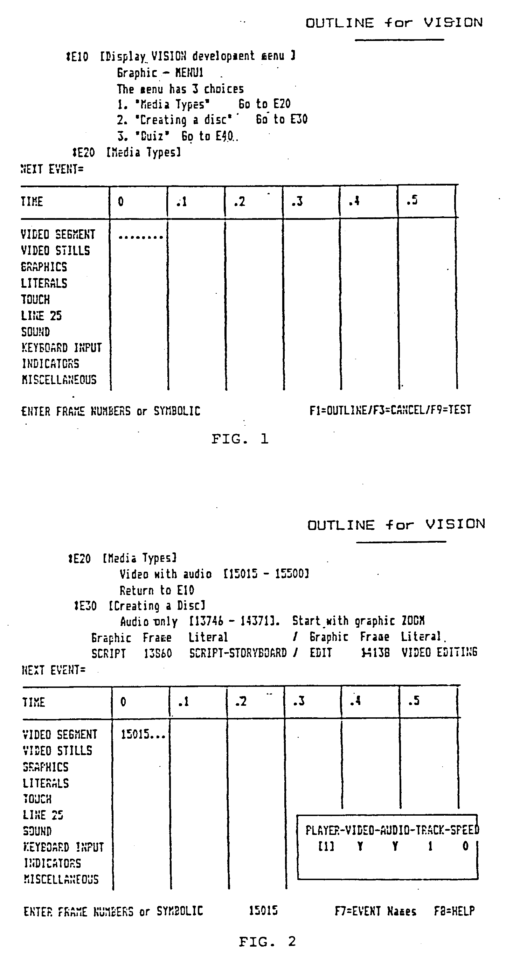

When first beginning the time-line process, the time-line will be empty as shown, for example, in Figure 1 of the drawings. As seen in the menu shown above, the author also has the ability to erase an event and test an event while in the composer program. It is useful to erase an event if the event has been authored incorrectly or design changes have been made. When an event is erased, its time-line is cleared of all entries. The author can use the conductor program to test an event without leaving the composer program. This helps the author to locate any problems while still in the authoring process.

Beginning first with the author profile, this option allows the author to identify information about the author and the equipment being used. This information is supplied by the author in a fill-in-the-blanks menu provided for that purpose. Using a similar fill-in-the-blanks menu, the author can next create or change the representation profile. The presentation profile is used to identify information about the presentation such as the maximum pause time, system color, pause key label, replay key label, continue key label, help key label, and the like.

After creating the author profile, the presentation profile and the outline, the actual presentation can be authored. This corresponds to option 4 on the composer menu shown above. The presentation to be authored is indicated in the composer menu beside the "Presentation = "field. The name shown in the example above is "Vision". The presentation name can be changed by selecting option 1 of the composer menu and changing the "Presentation Name" field in the author profile.

Initially, the outline is displayed with the cursor positioned at the first event. Another event may be selected by moving the cursor using the up and down arrow keys on the computer keyboard. While in the authoring process, pressing function key F7 will list the event names and pressing another function key F8 will display any available help. Pressing function key F10 will end the option and return to the composer menu.

Once the cursor is correctly positioned beside the desired event, pressing function key F2 will begin the authoring process. A screen is displayed showing the outline of the selected event and an empty time-line

5

as shown in Figure 1. In Figure 1, the outline is shown at the top of the display, and the time-line is shown at the bottom. In the time-line, the rows are event elements and the columns are times. The cursor is positioned on the video segment row at time 0. The cursor can be moved around the time-line using the four arrow or cursor control keys on the computer keyboard.

With specific reference to Figure 1, the time row indicates the length of time, in tenths of seconds, an event element will take to complete. The total amount of time for an event is displayed in the last non-empty column. The time-line will automatically reflect the time it takes for a video segment to play. The user may alter the time manually using designated keys, except when playing a video segment, but initially the time row is displayed with tenth second increments.

A video segment is a set of consecutive frames on a video disk which display as a moving video picture. To specify a video segment, the starting frame number is entered. A pop-up window is displayed at the bottom right corner of the screen as shown in Figure 2. As indicated by the brackets in Figure 2, the cursor is positioned at the first field in the pop-up window labeled "player". An entry is made in each field and the enter key is pressed. After the enter key is pressed, the cursor moves to the next field, and after entering a value for the last field, the pop-up window disappears and the cursor is positioned in the next time column of the video segment row. The ending frame number of the video segment must be entered in this column. Once entered, the composer program calculates the time it will take the video segment to play at a predetermined rate. The times in the time row are automatically altered, beginning with the column containing the ending frame number, to reflect the time it will take to play the video segment.

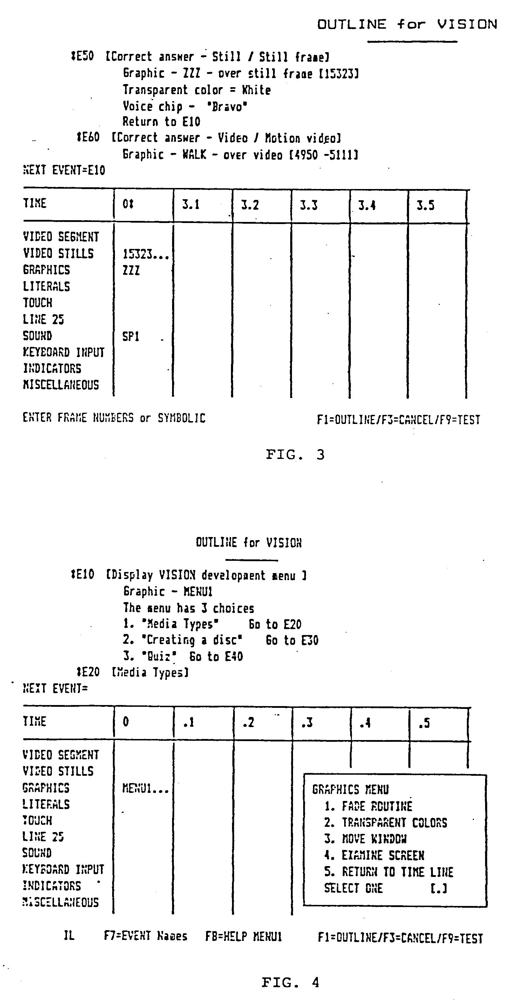

The next row in the time-line is labeled "video stills". A video still is a single frame on a video disk. All that is required to specify a video still is to enter the frame number of a frame from the video disk. This has been done in Figure 3. No pop-up window will appear because a video still displays only video; there is no audio.

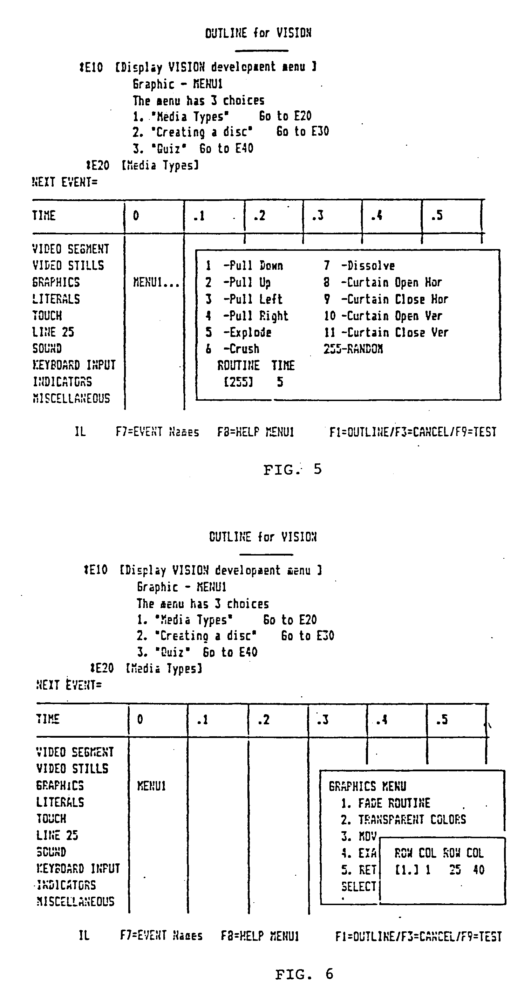

Upon pressing the enter key, the cursor is repositioned at the row labeled "graphics". Graphics frames can be either APA (all points addressable or bit mapped) frames or NAPLPS (North American Presentation Level Protocol Syntax) frames. The frame name of a graphic must be entered. Once entered, a pop-up menu is displayed at the bottom right corner of the screen as shown in Figure 4. Option 1 of the pop-up menu, fade routine, allows the author to select from several different fade and wipe techniques. Fades and wipes are transition routines that dictate how a graphic will replace a previous graphic on the screen. They allow for a smooth presentation by eliminating abrupt changes on the screen. When this option is selected, a menu listing the available fade techniques is displayed at the lower right corner of the screen as shown in Figure 5. Once the fade technique has been chosen, a time value between 0 and 9 must be entered. This value specifies how fast the fade or wipe will occur. The time value is in tenths of a second from 0 to 100. After selecting a fade or wipe routine and a time value, the graphics menu of Figure 4 is redisplayed to allow another selection.

Option 2 of the graphics pop-up menu of Figure 4, transparent colors, allows author to specify which color or colors are to be transparent. A video segment or video still can be displayed behind a graphic frame on the display screen. The video shows through the graphic in the areas in which color has been made transparent.

Option 3 of the graphics pop-up menu of Figure 4, move window, allows the author to move the window to a precise position. A pop-up menu is displayed which prompts the author for an upper left row and column and a lower right row and column as shown in Figure 6. Upon entering the values for the rows and columns, the pop-up menu for the move window is removed uncovering the graphics pop-up menu which it overlayed.

Option 4 of the graphics pop-up menu of Figure 4, examine screen, allows the author to see what the graphic specified in the time-line currently looks like. The graphic is displayed with grid numbers superimposed across the top and down the left side. These numbers are helpful in deciding where to position literals and touch areas on the screen. After examining the graphic, the function key F10 may be pressed to keep the graphic and return to the pop-up graphics menu. If the graphic is not correct, the function key F3 may be pressed to cancel the current processing and return to the time-line. Option 5, return to time-line, causes the pop-up graphics menu to disappear and the cursor to be positioned on the next row labeled "literals".

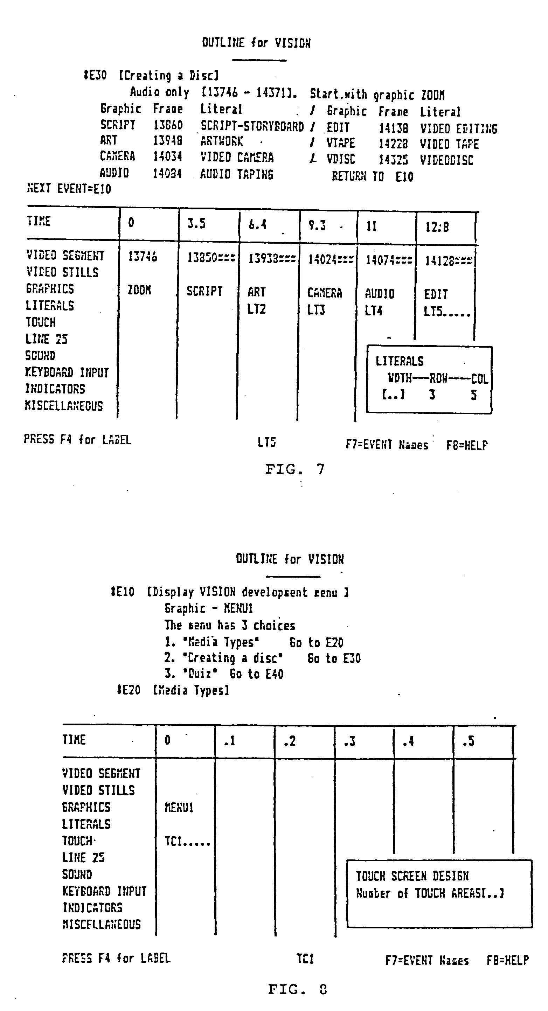

Literals allow the author to display messages on screen. A literal label is required and may either be created by the author or by pressing function key F4. The labels created by pressing F4 are in the sequence LT1, LT2, etc. After entering a label, a pop-up menu is displayed at the lower right corncer of the screen as shown in Figure 7. The author is prompted for the screen width and row and column where the literal should be positioned. A graphics screen is then displayed and the author is prompted to enter the literal. Once the literal is entered, it can be moved around the screen using the arrow or cursor control keys on the keyboard. The color of the literal can be changed using the function keys F1 and F2. When a literal color has been selected, it is accepted by pressing function key F9.

The background color can be changed by pressing function key F4. When a background color has been selected, it is accepted by pressing function key FI0. The literal processing may be canceled by pressing function key F3. In either case, the time-line is then redisplayed.

The next row on the time-line is labeled "touch". A touch area is an area on the screen that has been activated to respond to touch. The author has compete flexibility in the size, location and number of touch areas. However, the touch area must always be a rectangle. In the implemented system, sixty touch areas are supported, ten of which are reserved for system use. A touch label is required and can either be created by the author or by pressing function key F4. F4 generates labels in the sequence TC1, TC2, etc. After entering a label, the author is prompted for the number of touch areas as shown in Figure 8. A graphics screen is then displayed with a blinking cursor. The cursor must be positioned at a point corresponding to the upper left corner of the touch area. This is done using the arrow or cursor control keys on the keyboard.

When the cursor is in the correct position, the enter key is pressed. The author can then enlarge the area and the up and left keys shrink the area. When the touch area is positioned appropriately, the enter key is pressed and a touch area is automatically assigned to the area. The remaining touch areas, if any, are created in the same way. When the specified number of touch areas have been created, function key F10 is pressed to indicate approval of all the defined touch areas. The author is prompted for various kinds of visual or auditory feedback associated with each active area. The author is then prompted for a branch event for each touch area. When all branch events have been entered, the author has the option of saving this touch area format to be used with other graphics, and then the time-line is redisplayed.

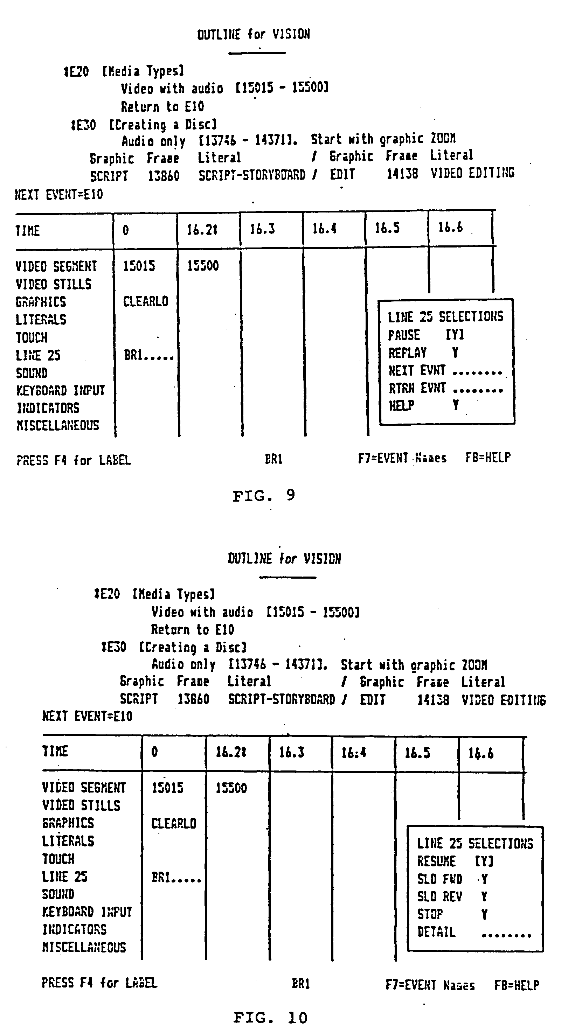

The next row on the time-line in Figure 1 is labeled "line 25". Line 25 allows the author to specify what user control options are to be displayed at the bottom of the screen; e.g. , pause and replay. These options are touch areas that give the end user control over the presentation of information. A line 25 label is required and may either be created by the author or by pressing function key F4. F4 generates labels in the sequence BR1, BR2, etc. Once a label is entered, a selection menu is displayed at the lower right corner of the screen as shown in Figure 9. The brackets in the pop-up menu indicate the location of the cursor. It will be noted that a "Y" has been entered in the pause field. This gives the user the ability to pause video. When this option is chosen by the author, a second pop-up menu is displayed as shown in Figure 10. This pop-up menu lists additional user control options. For example, the resume option gives the user the ability to resume the video after a pause.

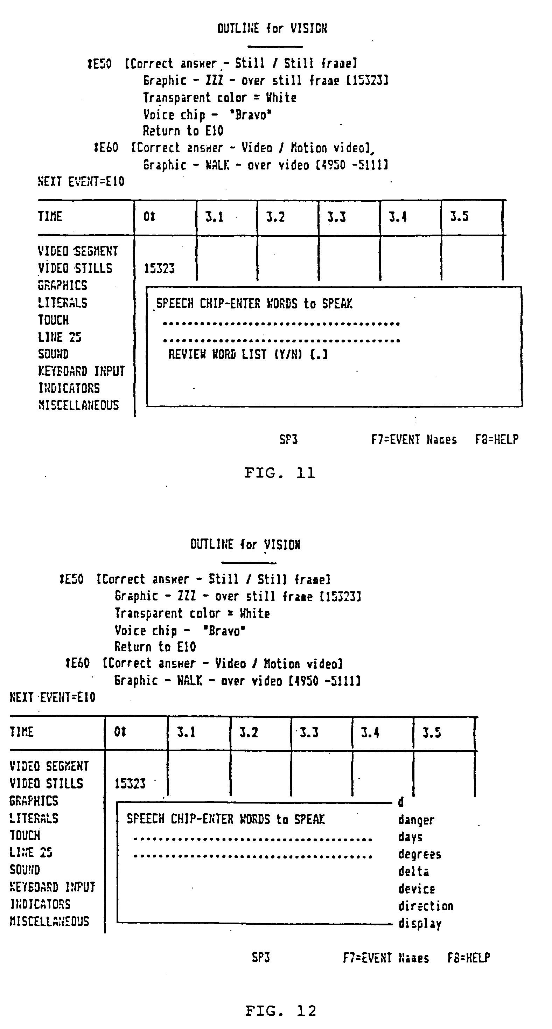

After the detail screen name is entered in the pop-up menu shown in Figure 10, the menu disappears and the cursor is repositioned on the row of the time-line labeled sound. Sound allows the author to specify words and phrases for the voice synthesizer. A sound label is required and may be created by the author or by pressing function key F4. The labels generated by the F4 key are in the sequenced SP1, SP2, etc... A pop-up menu is displayed which prompts the author for the word or words to be spoken. This pop-up menu is shown in Figure 11. The author is given the option of reviewing the word list before entering a word or words in this menu. If the author chooses to review the word list, the author is first prompted to enter a starting letter. The word list, beginning with this letter, is displayed to the right side of the pop-up menu as shown in Figure 12 which shows words from the list beginning with the letter "d". The list can be scrolled using the arrow or cursor control keys on the keyboard. A word is selected by positioning the cursor on the word and pressing the enter key. The word then appears in the "Enter Words to Speak" field of the pop-up menu. If the author decides not to review the word list, the cursor is positioned in the "Enter Words to Speak" field, and the words can be entered through the keyboard. If a word is entered which is not the word list, the message "word not found" is displayed. If the word or phase is valid, the menu disappears, and the cursor is repositioned on the row labeled keyboard input in the time-line.

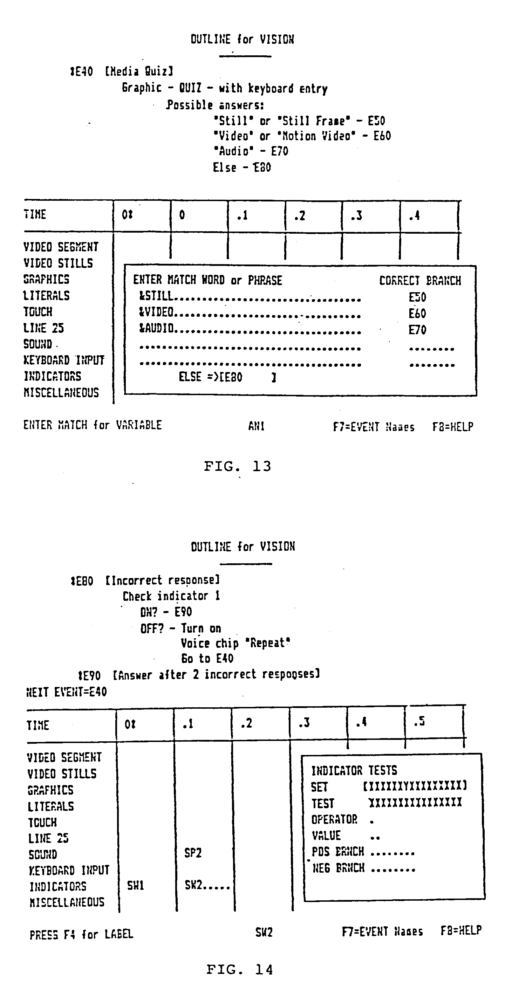

Keyboard input allows the author to specify variables and valid user input for these variables. The author is prompted for a variable to be used to match words. It must begin with a "$" if its value is to be alphanumeric or a "%" if its value is to be numeric. A label is required to identify the match word or phase. The label can be created by the author or by pressing function key F4. The labels generated by the F4 key are in the sequence AN1, AN2, etc. The author is then prompted for the match words or phases and the appropriate branch event in the case of a match. The pop-menu for this is shown in Figure 13. Up to five match words or phases and branch events are allowed. Pressing the enter key moves the cursor through the fields. The author may also specify an event to branch to if a match was not found. After entering the branch event for the else condition, the pop-up menu disappears, and the cursor is repositioned on the row labeled indicators in the time-line.

An indicator is a switch that can be set on or off by the author. The indicator can be tested for an on or off position and branching can occur based on the switch settings. There are sixteen switches available to the author. A label is required which can be created by the user or by pressing function key F4. The labels generated by the F4 key are in the sequence SW1, SW2, etc.. After entering a label, a pop-up menu is displayed at le lower right corner of the screen as shown in Figure 14. The set line in the menu allows the author to set a switch on or off. To set the switch on, the author replaces the corresponding "X" with a "Y" . To set the switch off, the author replaces the corresponding "X" with a "N". The test line in the menu allows the author to test one or more switches. Each switch can be tested for either an on or off position. For each switch to be tested, the corresponding "X" is replaced with a "Y" or "N". The operator line of the menu specifies what operation is to be performed on the switch settings. The value line is to indicate how many of the switches are tested correctly. Branching to another event is based on the result of the operator and value. The author specifies the event to be performed based on a positive result or a negative result.

The miscellaneous row of the time-line provides other authoring functions which are not defined within any of the other rows. The functions available on this line are logging and video disk loading and unloading. The author can specify that each item of an event be recorded into a log file. The author specifies when logging of the event is to start and stop using the log and molog control words in the miscellaneous line. When log appears in the miscellaneous line, all information about the event is logged until either the end of the event is reached, a branch to another event occurs, or a nolog appears in the miscellaneous line.

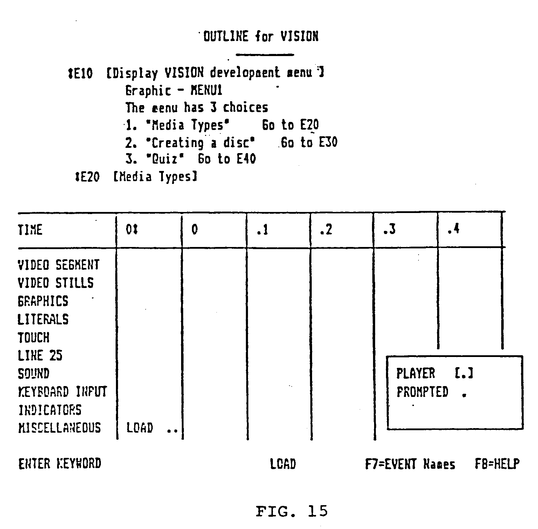

The miscellaneous line also allows for the loading and unloading of the video disk player. To unload the video disk, the author types the word "unload" in the miscellaneous line. A pop-up menu then appears prompting for the player number and user load prompt as shown in Figure 15. The author specifies which player is to be loaded; i.e., player 1 or player 2. The user prompt field indicates whether the user will be prompted with a standard load screen. If a "Y" is entered, a screen will be displayed showing the user how to load the video disk player. The user must touch the screen before the video disk is actually loaded. If an "N" is entered, the video disk will be loaded without prompting the user. After entering a response to the user prompt field, the pop-up menu disappears and the cursor returns to the time-line.

The process just described is repeated for each event in the presentation; however, it will be understood of course that not every event element will be filled in and, in some cases, only a single event in the presentation. The author typically proceeds through the outline filling in each event time-line untill the presentation has been completely composed.

As mentioned, the conductor is the runtime facility for the composer application. What this means is that the once a presentation has been authored, only the conductor is required to run the presentation. In other words, only the author requires both the composer and the conductor applications; The end users need to have only the conductor application in their computer terminal or stand alone computers. The conductor takes the information authored with the time-lines during the authoring process and performs the media mixing indicated by each time-line. The conductor uses the vision head as the interface device for input/putput to the end user.

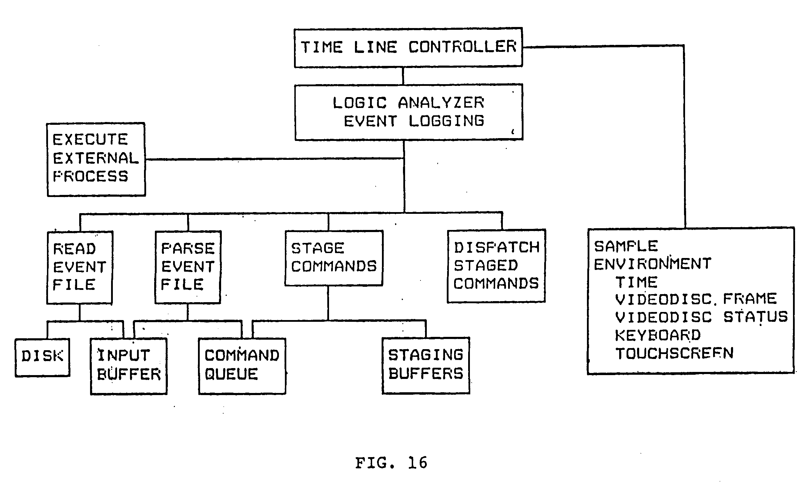

Referring now to Figure 16, there is shown the overall block diagram of the structure of the conductor program. The heart of the program is the time-line controller which interfaces with the device environment sampler and a logic analyser. The logic analyser interfaces with a read event file module, an event file parser, a command stager, and a staged command dispatcher. Processing is carried out in these modules while waiting for an external event, such as a user response, to occur. The following program written in Program Design Language (PDL) describes this processing:

```
WHILE WAITING ON EXTERNAL EVENT;
   DO ONE OF THE FOLLOWING IN PRIORITY ORDER
       SEQUENCE
   1   WHILE COMMAND QUEUE NON-EMPTY
          UNTIL STAGING BUFFERS FULL
             CONVERT COMMAND QUEUE TO STAGED COMMANDS
          END UNTIL
       WEND
   2   WHILE INPUT BUFFER NON-EMPTY.
          UNTIL COMMAND QUEUE FULL
             PARSE INPUT BUFFER TO COMMAND QUEUE
          END UNTIL


       WEND
   3   WHILE MATCH ON EVENT NAME OR NEXT LOGICAL
             EVENT NAME;
          UNTIL INPUT BUFFER FULL
             READ EVENT FILE TO INPUT BUFFER
          END UNTIL
       WEND
ENDDO
       WEND
       PROCESS ENVIRONMENT
          IF LOGGING ON, THEN LOG ENVIRONMENT
             LOG FILE NAME =  ddmmyyhh.mm
          IF SYSTEM FUNCTIONS WAITING ON ENVIRONMENT
             THEN EXECUTE SYSTEM FUNCTIONS
          IF STAGED COMMANDS WAITING ON ENVIRONMENT
             THEN DISPATCH STAGED COMMANDS
          ELSE IF NON-STAGED COMMANDS WAITING ON
               ENVIRONMENT
             THEN STAGE AND DISPATCH COMMANDS
             OR EXECUTE EXTERNAL PROCESS 4
          ENDIF
       END PROCESS EXTERNAL EVENT
       LOOP
```

9

The PDL code for reading an event file is as follows:

```
WHILE MATCH ON VENT NAME OR NEXT LOGICAL EVENT
     NAME;
   UNTIL INPUT BUFFER FULL
     READ EVENT FILE TO INPUT BUFFER
   END UNTIL
WEND
512 BYTES FOR UP TO 8 64-BYTE RECORDS FROM FILE
     INDEXED BY EVENT NAME
MAINTAIN BUFFER TAIL
MAINTAIN LOGIC FOR EVENT NAME OR NEXT EVENT NAME
     COMPLETELY READ OR NOT
```

The PDL code for parsing an event file is as follows:

```
WHILE INPUT BUFFER NON-EMPTY;
   UNTIL COMMAND QUEUE FULL
     PARSE INPUT BUFFER TO COMMAND QUEUE
   END UNTIL
WEND
COMMAND QUEUE IS A 2Ø-ELEMENT ARRAY FOR PARSING
     UP TO 2Ø COMMANDS, LENGTH = 2Ø*3 = 6Ø BYTES
     (where T is the token in hexidecimal and XX is
     the offset in hexidecimal)
   1 TXX COMMAND TYPE = 1 BYTE
   2 TXX BYTE OFFSET  IN INPUT BUFFER = 2 BYTES
   3 TXX
   • •••
   • •••
   • •••
  2Ø TXX
MAINTAIN QUEUE TAIL
MAINTAIN INPUT BUFFER HEAD
```

The PDL code for staging commands is as follows:

```
WHILE COMMAND QUEUE NON-EMPTY:
   UNTIL STAGING BUFFERS FULL
      CONVERT COMMAND QUEUE TO STAGED COMMANDS
   END UNTIL
WEND
VIDEODISK STAGER
   CONVERT TO PIONEER LOGIC
      CONVERT TO PIONEER INVERTED FORMAT
   MAINTAIN STAGER TAIL
   MAINTAIN DISPATCH LOGIC
SCREEN STAGER
   BLOAD TO COMPRESSED BYFFERS (2*32K) AND
         DECOMPRESS TO DECOMPRESSED BYFFERS (2*32K)
   MAINTAIN BUFFER AVAILABLE FLAGS
   MAINTAIN DISPATCH LOGIC
```

```
LIETRAL STAGER
   READ INDEXED LIETRAL FILE TO LITERAL BUFFER
   MAINTAIN LITERAL BUFFER (5*8Ø BYTES)
   MAINTAIN DISPATCH LOGIC
TOUCHSCREEN STAGER
   CONVERT TOUCHSCREEN COORDINATES
   ONE-LEVEL BUFFER (UP TO 6Ø TOUCHAREAS)
   MAINTAIN DISPATCH LOGIC
SPEECH STAGER
  BUILD SPEECH STRING
  ONE-ELEMENT BUFFER
  MAINTAIN DISPATCH LOGIC
ANSWER ANALYSIS STAGER
  READ INDEXED ANSWER FILE TO MATCH BUFFER
  ONE-ELEMENT BUFFER
  MAINTAIN DISPATCH LOGIC
BRANCH STAGER
  PLACE BRANCH POINTS IN BRANCH BUFFERS
  ONE-LEVEL BUFFER (UP TO 6Ø BRANCHES)
  MAINTAIN BRANCH LOGIC
     WAITING ON ENVIRONMENT FOR LOGIC ANALYSER
  MAINTAIN DISPATCH LOGIC
```

The PDL code for the logic analyser/event logger is as follows:

```
IF LOGGING ON, THEN WAITING ON ENVIRONMENT
IF ENVIRONMENT TRUE;
  IF EXTERNAL PROCESS WAITING ON ENVIRONMENT
    THEN SAVE EXECUTION ENVIRONEMENT (SNAPSHOT)
       EXECUTE EXTERNAL PROCESS
    RESTORE EXECUTION ENVIRONMENT
  RESUME
  IF STAGED COMMANDS WAITING ON ENVIRONMENT
    THEN DISPATCH STAGED COMMANDS
       LOGICAL SEQUENCE OF DISPATCH
  ELSE IF BRANCH WAITING ON ENVIRONMENT
    THEN READ EVENT FILE
    CONVERT TO STAGED COMMANDS
```

```
                    DISPATCH STAGED COMMANDS
               ELSE (IF ENVIRONMENT FALSE),
                    IF TIME ALLOWS
                       CALL STAGE ROUTINE
                    ENDIF
               ENDIF
```

The PDL code for the time-line controller is as follows:

```
               SAMPLE ENVIRONMENT
                  DISCARD DISALLOWED SAMPLES
                  SET TRUE/FALSE CONDITIONS
                  CALL LOGIC ANALYSER/EVTN LOGGER
               LOOP TO SAMPLE ENVIRONMENT
```

Source code for an implementation of the conductor is included in the appendix. This source code was written using the PDL listings above.

While the invention has been described in terms of a specific preferred embodiment, those skilled in the art will understand that the invention can be practiced with modifications and variations in both software and hardware within the scope of the appended claims. For example, the preferred embodiment of the invention has been described in terms of current technology which includes video disk players. However, it will be understood that the invention is not limited to this particular technology and can support any type of video, graphic and audio storage medium whether in digital or analog format. Further, the source code appendicies for the composer and conductor are included by way of specific illustrative example only, and those skilled in the art will recognize that other and different code could be written to implement the claimed invention.

## Claims

1. An interactive software multi-media presentation composing method for a computer system, said computer system comprising a display monitor and an operator input device, said computer system controlling a plurality of input and output multi-media devices, said software method assisting an operator of the computer system in developing an interactive multi-media presentation for use by a user, said interactive multi-media presentation comprising a plurality of events executed by the computer system and the input and output multi-media devices under the control of said computer system and in response to inputs by said user, said software method comprising the steps of :
   - providing to the operator on the display monitor for each event in a presentation list of events a set of event elements which may take place during the event and a set of time periods for the event elements, each event element in the list corresponding to an input or output multi-media device controlled by said computer ; said set of event elements and said set of time elements defining a matrix whereby each cell of the matrix represents the operation of one of said multi-media devices during one time period of a plurality of time periods of an event ;
   - prompting the operator to select one or more event elements from the list and to specify a time period and other predefined operating conditions for each event element selected ;
   - prompting the operator, for each event, to specify a next event, said next event including a branch event dependant on a user input during said interactive presentation ; and,
   - generating and storing software means based on representation of each event and the sequence in which events are to be executed by the computer system and the devices under its control, all in response to signals from the operator input device.

2. The software based method recited in claim 1 wherein the operator input device is a keyboard and further comprising the step of prompting the operator to specify a word or phrase for comparing with a keyed variable input from said keyboard.

3. The software method recited in claim 1 wherein the operator input device is a touch screen, further comprising the steps of :
   - prompting the operator to define the size and location of active areas on the touch screen ; and,
   - prompting the operator to specify a branch event in the presentation for each defined active area.

4. The software based method recited in claim 3 further including the step of prompting the operator to specify for each defined active area various kinds of visual or auditory feedback to a user of a multi-media presentation.

5. The software based method recited in claim 1 wherein the output devices include a video disk player for reading a video disk that stores information to be presented, further comprising the step of prompting the operator to specify an address on the video disk when an event element corresponding to the video disk player is selected by the operator.

6. The software based method recited in claim 1 including the step of displaying to the operator on the display monitor options selectable by the operator of authoring an event, erasing an event, or testing an event.

7. The software based method recited in claim 6 wherein the option of authoring an event includes the option of editing an event previously authored, said method comprising the step of accepting an operator input editing an event by inserting or removing columns in the matrix.

8. The software based method recited in claim 7 wherein the operation of authoring an event includes the option of editing an event previously authored and a row of the matrix is a time row specifying the time periods of the event elements, said method comprising the step of accepting an operator input to directly edit the time row.

9. The software based method recited in claim 8 wherein, when the operator selects the option to test an event, said method comprises the step of running an authored event.

**Patentansprüche**

1. Eine interaktive Software-Gestaltungsmethode der Multimediendarstellung für ein Computersystem, wobei besagtes Computersystem einen Anzeigemonitor und eine Bedienereingabeeinrichtung umfaßt, wobei besagtes Computersystem eine Vielzahl von Multimedien-Eingabe- und Ausgabeeinrichtungen steuert, wobei die besagte Softwaremethode einen Bediener des Computersystems dabei unterstützt, eine interaktive Multimediendarstellung zur Benutzung durch einen Anwender zu entwickeln, wobei besagte interaktive Multimediendarstellung eine Vielzahl von Ereignissen umfaßt, die vom Computersystem und den von besagtem Computersystem gesteuerten Multimedien-Eingabe- und Ausgabeeinrichtungen und in Abhängigkeit von den Eingaben des besagten Anwenders ausgeführt werden, wobei die besagte Softwaremethode die folgenden Schritte umfaßt:
   - dem Bediener auf dem Anzeigemonitor für jedes Ereignis in einer Ereignisdarstellungsliste einen Satz von Ereigniselementen, die während des Ereignisses stattfinden, und einen Satz von Zeitperioden für die Ereigniselemente zur Verfügung zu stellen, wobei jedes Ereigniselement in der Liste einer Multimedien-Eingabe-oder Ausgabeeinrichtung entspricht, die von besagtem Computer gesteuert wird; dabei definieren besagter Satz von Ereigniselementen und besagter Satz von Zeitelementen eine Matrix, bei der jede Matrixzelle die Bedienung einer der besagten Multimedieneinrichtungen während einer Zeitperiode aus einer Vielzahl von Zeitperioden eines Ereignisses darstellt;
   - den Bediener zu veranlassen, ein oder mehrere Ereigniselemente aus der Liste auszuwählen und eine Zeitperiode und andere vorher definierte Betriebsbedingungen für jedes ausgewählte Ereigniselement anzugeben;
   - den Bediener zu veranlassen, bei jedem Ereignis ein nachfolgendes Ereignis anzugeben, wobei besagtes nachfolgendes Ereignis ein Verzweigungsereignis in Abhängigkeit von einer Benutzer-

EP 0 239 884 B1

eingabe während der besagten interaktiven Darstellung und
- die Generierung und Speicherung von Softwaremitteln, die auf der Darstellung jedes Ereignisses und der Abfolge beruhen, in der die Ereignisse vom Computersystem und den von ihm gesteuerten Einrichtungen ausgeführt werden sollen, wobei alles von den Signalen von der Bedienereingabeeinrichtung abhängt.

2. Die in Anspruch 1 angeführte auf Software basierende Methode, wobei die Bedienereingabeeinrichtung eine Tastatur ist und weiterhin den Schritt umfaßt, den Bediener zu veranlassen, ein Wort oder einen Satz anzugeben, der mit einer verschlüsselten Variableneingabe an besagter Tastatur verglichen wird.

3. Die in Anspruch 1 angeführte Softwaremethode, wobei die Eingabeeinrichtung für den Bediener ein Sensorbildschirm ist, die weiterhin die folgenden Schritte umfaßt:
- den Bediener dazu zu veranlassen, die Größe und die Position von aktiven Bereichen auf dem Sensorbildschirm zu definieren und
- den Bediener dazu zu veranlassen, ein Verzweigungsereignis in der Darstellung für jeden definierten aktiven Bereich vorzuschreiben.

4. Die in Anspruch 3 angeführte auf Software basierende Methode, die weiterhin den Schritt umfaßt, den Bediener dazu zu veranlassen, für jeden definierten aktiven Bereich verschiedene Arten von visuellen oder auditiven Rückkopplungen für einen Benutzer einer Multimedien-Darstellung vorzuschreiben.

5. Die in Anspruch 1 angeführte auf Software basierende Methode, wobei die Ausgabeeinrichtungen einen Videoplattenspieler zum Lesen einer Bildplatte umfaßt, die darzustellende Informationen speichert, wobei weiterhin der Schritt inbegriffen ist, den Bediener dazu zu veranlassen, eine Adresse auf der Bildplatte vorzuschreiben, falls ein Ereigniselement, das dem Videoplattenspieler entspricht, vom Bediener ausgewählt wird.

6. Die in Anspruch 1 angeführte auf Software basierende Methode, die den Schritt umfaßt, daß dem Bediener auf dem Anzeigemonitor von ihm auswählbare Optionen zur Schaffung eines Ereignisses, zur Löschung eines Ereignisses oder zur Prüfung eines Ereignisses angezeigt werden.

7. Die in Anspruch 6 angeführte auf Software basierende Methode, wobei die Option auf die Schaffung eines Ereignisses die Option zur Edierung eines vorher geschaffenen Ereignisses einschließt, wobei besagte Methode den Schritt umfaßt, daß eine Bedienereingabe zur Edierung eines Ereignisses mittels des Einsatzes oder der Entfernung von Spalten in der Matrix akzeptiert wird.

8. Die in Anspruch 7 angeführte auf Software basierende Methode, wobei der Vorgang der Schaffung eines Ereignisses die Option zur Edierung eines vorher geschaffenen Ereignisses umfaßt und eine Zeile der Matrix eine Zeitzeile ist, die die Zeitabschnitte der Ereigniselemente vorschreibt, wobei besagte Methode den Schritt umfaßt, daß eine Bedienereingabe zur direkten Edierung der Zeitzeile akzeptiert wird.

9. Die in Anspruch 8 angeführte auf Software basierende Methode, wobei dann, wenn der Bediener die Option zur Prüfung eines Ereignisses auswählt, die besagte Methode den Schritt des Durchlaufs eines geschaffenen Ereignisses umfaßt.

**Revendications**

1. Procédé de composition de présentation multi-média utilisant un logiciel interactif pour ordinateur, ledit ordinateur comprenant un moniteur à écran et un dispositif d'entrée pour opérateur, ledit ordinateur contrôlant un ensemble de dispositifs d'entrée/sortie multi-média, ledit procédé logiciel assistant un opérateur du système ordinateur dans le développement d'une présentation multi-média intéractive à usage d'un utilisateur, ladite présentation multi-média interactive comprenant une pluralité d'événements réalisés par l'ordinateur et les dispositifs d'entrée/sortie multi-média sous le contrôle dudit ordinateur et en réponse à des entrées de l'utilisateur, ledit procédé logiciel comprenant les étapes suivantes :
- fourniture à l'opérateur sur l'écran du moniteur, pour chaque événement, d'une liste de présentation d'événements, d'un ensemble d'éléments d'événement qui peuvent intervenir dans l'événe-

15

ment et un ensemble de périodes de temps pour les éléments de l'événement, chaque élément d'événement de la liste correspondant à un dispositif multi-média d'entrée/sortie contrôlé par ledit ordinateur ; ledit ensemble d'éléments d'événements et ledit ensemble d'éléments de temps définissant une matrice dont chaque cellule représente le fonctionnement de l'un des dispositifs multi-média durant une période de temps dans un ensemble de périodes de temps de l'événement ;

- sollicitation de l'opérateur pour qu'il choisisse un ou plusieurs éléments d'événements de la liste et qu'il spécifie une durée ainsi que d'autres conditions d'opération pour chaque élément d'événement choisi ;
- sollicitation de l'opérateur pour qu'il spécifie pour chaque événement, un événement suivant, ledit événement suivant comprenant un événement de branchement dépendant d'une entrée de l'utilisateur durant ladite présentation interactive ; et,
- génération et stockage de moyens logiciels en fonction des événements et séquences d'exécution desdits événements par l'ordinateur et les dispositifs qu'il contrôle, le tout en réponse à des signaux du dispositif d'entrée de l'opérateur.

2. Procédé utilisant un logiciel selon la revendication 1 dans lequel le dispositif d'entrée de l'opérateur est un clavier et comprenant en outre l'étape de sollicitation de l'opérateur pour qu'il spécifie un mot ou phrase à comparer à une variable entrée à travers le clavier.

3. Procédé de type logiciel selon la revendication 1 dans lequel le dispositif d'entrée de l'opérateur est un écran tactile, comprenant en outre les étapes suivantes :
- sollicitation de l'opérateur pour qu'il définisse la taille et l'emplacement de zones actives sur l'écran tactile ; et,
- sollicitation de l'opérateur pour qu'il spécifie un événement de branchement dans la présentation pour chacune des zones actives définies.

4. Procédé à base de logiciel selon la revendication 3 comprenant en outre l'étape de sollicitation de l'opérateur pour qu'il spécifie, pour chacune des zones actives définies, différents types de moyen de réaction visuelle ou auditive destinés à l'utilisateur d'une présentation multi-média.

5. Procédé à base de logiciel selon la revendication 1 dans lequel les dispositifs de sortie comprennent un lecteur de disque vidéo destiné à lire un disque vidéo stockant des informations à présenter, comprenant en outre l'étape de sollicitation de l'opérateur pour qu'il spécifie une adresse sur le disque vidéo lorsqu'un élément d'événement concernant le lecteur de disque vidéo est choisi par l'opérateur.

6. Procédé à base de logiciel selon la revendication 1 comprenant l'étape d'affichage pour l'opérateur et sur l'écran moniteur, d'options de choix permettant à l'opérateur de créer un événement, effacer un événement, ou tester un événement.

7. Procédé à base de logiciel selon la revendication 6 dans lequel l'option de création d'un événement comprend la possibilité d'éditer un événement créé précédemment, ladite méthode comprenant l'étape d'acceptation d'une entrée d'un opérateur éditant un événement en insérant ou en enlevant des indications dans les colonnes de la matrice.

8. Procédé à base de logiciel selon la revendication 7 dans lequel l'opération de création d'un événement inclut l'option de l'édition d'un événement précédemment créé et une ligne de la matrice est destinée à spécifier les durées d'éléments d'événement, ledit procédé comprenant l'étape d'acceptation d'une entrée d'un opérateur, à éditer directement dans la ligne de temps.

9. Procédé à base de logiciel selon la revendication 8 dans lequel, lorsque l'opérateur choisit l'option de tester un événement, ledit procédé comprend l'étape de déroulement d'un événement créé.

OUTLINE for VISION

```
#E10  [Display VISION development menu ]
        Graphic - MENU1
        The menu has 3 choices
        1. "Media Types"      Go to E20
        2. "Creating a disc"    Go to E30
        3. "Quiz"  Go to E40.
   #E20  [Media Types]
NEXT EVENT=
```

| TIME | 0 | .1 | .2 | .3 | .4 | .5 |
|---|---|---|---|---|---|---|
| VIDEO SEGMENT | ........ | | | | | |
| VIDEO STILLS | | | | | | |
| GRAPHICS | | | | | | |
| LITERALS | | | | | | |
| TOUCH | | | | | | |
| LINE 25 | | | | | | |
| SOUND | | | | | | |
| KEYBOARD INPUT | | | | | | |
| INDICATORS | | | | | | |
| MISCELLANEOUS | | | | | | |

ENTER FRAME NUMBERS or SYMBOLIC          F1=OUTLINE/F3=CANCEL/F9=TEST

FIG. 1

OUTLINE for VISION

```
#E20  [Media Types]
        Video with audio  [15015 - 15500]
        Return to E10
  #E30  [Creating a Disc]
        Audio only  [13746 - 14371].  Start with graphic ZOOM
     Graphic  Frame   Literal         /  Graphic  Frame  Literal
     SCRIPT   13S60   SCRIPT-STORYBOARD /  EDIT    14138  VIDEO EDITING
NEXT EVENT=
```

| TIME | 0 | .1 | .2 | .3 | .4 | .5 |
|---|---|---|---|---|---|---|
| VIDEO SEGMENT | 15015... | | | | | |
| VIDEO STILLS | | | | | | |
| GRAPHICS | | | | | | |
| LITERALS | | | | | | |
| TOUCH | | | | | | |
| LINE 25 | | | | | | |
| SOUND | | | | PLAYER-VIDEO-AUDIO-TRACK-SPEED | | |
| KEYBOARD INPUT | | | | [1]    Y    Y    1    0 | | |
| INDICATORS | | | | | | |
| MISCELLANEOUS | | | | | | |

ENTER FRAME NUMBERS or SYMBOLIC       15015       F7=EVENT Names   F8=HELP

FIG. 2

OUTLINE for VISION

```
!E50  [Correct answer - Still / Still frame]
           Graphic - ZZZ - over still frame [15323]
           Transparent color = White
           Voice chip - "Bravo"
           Return to E10
   !E60  [Correct answer - Video / Motion video]
           Graphic - WALK - over video [4950 -5111]
NEXT EVENT=E10
```

| TIME | 0t | 3.1 | 3.2 | 3.3 | 3.4 | 3.5 |
|---|---|---|---|---|---|---|
| VIDEO SEGMENT | | | | | | |
| VIDEO STILLS | 15323... | | | | | |
| GRAPHICS | ZZZ | | | | | |
| LITERALS | | | | | | |
| TOUCH | | | | | | |
| LINE 25 | | | | | | |
| SOUND | SP1 | | | | | |
| KEYBOARD INPUT | | | | | | |
| INDICATORS | | | | | | |
| MISCELLANEOUS | | | | | | |

ENTER FRAME NUMBERS or SYMBOLIC                F1=OUTLINE/F3=CANCEL/F9=TEST

FIG. 3

OUTLINE for VISION

```
!E10  [Display VISION development menu ]
           Graphic - MENU1
           The menu has 3 choices
           1. "Media Types"    Go to E20
           2. "Creating a disc"   Go to E30
           3. "Quiz" Go to E40
   !E20  [Media Types]
NEXT EVENT=
```

| TIME | 0 | .1 | .2 | .3 | .4 | .5 |
|---|---|---|---|---|---|---|
| VIDEO SEGMENT | | | | | | |
| VIDEO STILLS | | | | | | |
| GRAPHICS | MENU1... | | | | | |
| LITERALS | | | | | | |
| TOUCH | | | | | | |
| LINE 25 | | | | | | |
| SOUND | | | | | | |
| KEYBOARD INPUT | | | | | | |
| INDICATORS | | | | | | |
| MISCELLANEOUS | | | | | | |

```
                              GRAPHICS MENU
                                 1. FADE ROUTINE
                                 2. TRANSPARENT COLORS
                                 3. MOVE WINDOW
                                 4. EXAMINE SCREEN
                                 5. RETURN TO TIME LINE
                                 SELECT ONE        [.]
```

   IL    F7=EVENT Names   F8=HELP MENU1        F1=OUTLINE/F3=CANCEL/F9=TEST

FIG. 4

18

OUTLINE for VISION
————

‡E10  [Display VISION development menu ]
        Graphic - MENU1
        The menu has 3 choices
        1. "Media Types"    Go to E20
        2. "Creating a disc"   Go to E30
        3. "Quiz"  Go to E40
    ‡E20  [Media Types]
NEXT EVENT=

| TIME | 0 | .1 | .2 | .3 | .4 | .5 |
|------|---|----|----|----|----|----|
| VIDEO SEGMENT<br>VIDEO STILLS<br>GRAPHICS<br>LITERALS<br>TOUCH<br>LINE 25<br>SOUND<br>KEYBOARD INPUT<br>INDICATORS<br>MISCELLANEOUS | | MENU1... | 1 -Pull Down      7 -Dissolve<br>2 -Pull Up        8 -Curtain Open Hor<br>3 -Pull Left      9 -Curtain Close Hor<br>4 -Pull Right    10 -Curtain Open Ver<br>5 -Explode       11 -Curtain Close Ver<br>6 -Crush         255-RANDOM<br>  ROUTINE  TIME<br>   [255]   5 | | | |

IL    F7=EVENT Names   F8=HELP MENU   F1=OUTLINE/F3=CANCEL/F9=TEST

FIG. 5

OUTLINE for VISION
————

‡E10  [Display VISION development menu ]
        Graphic - MENU1
        The menu has 3 choices
        1. "Media Types"     Go to E20
        2. "Creating a disc"    Go to E30
        3. "Quiz"  Go to E40
    ‡E20  [Media Types]
NEXT EVENT=

| TIME | 0 | .1 | .2 | .3 | .4 | .5 |
|------|---|----|----|----|----|----|
| VIDEO SEGMENT<br>VIDEO STILLS<br>GRAPHICS<br>LITERALS<br>TOUCH<br>LINE 25<br>SOUND<br>KEYBOARD INPUT<br>INDICATORS<br>MISCELLANEOUS | | MENU1 | | | GRAPHICS MENU<br>  1. FADE ROUTINE<br>  2. TRANSPARENT COLORS<br>  3. MOV<br>  4. EXA  ROW COL ROW COL<br>  5. RET  [1.] 1   25  40<br>  SELECT | |

IL    F7=EVENT Names   F8=HELP MENU   F1=OUTLINE/F3=CANCEL/F9=TEST

FIG. 6

19

OUTLINE for VISION

```
#E30  [Creating a Disc]
           Audio only  [13746 - 14371].  Start.with graphic ZOOM
        Graphic  Frame    Literal             /  Graphic  Frame   Literal
        SCRIPT   13860    SCRIPT-STORYBOARD /  EDIT    14138   VIDEO EDITING
        ART      13948    ARTWORK    ·       /  VTAPE   14228   VIDEO TAPE
        CAMERA   14034    VIDEO CAMERA       L  VDISC   14325   VIDEODISC
        AUDIO    14094    AUDIO TAPING           RETURN TO  E10
NEXT EVENT=E10
```

| TIME | 0 | 3.5 | 6.4 | 9.3 | 11 | 12:8 |
|---|---|---|---|---|---|---|
| VIDEO SEGMENT | 13746 | 13850=== | 13938=== | 14024=== | 14074=== | 14128=== |
| VIDEO STILLS | | | | | | |
| GRAPHICS | ZOOM | SCRIPT | ART | CAMERA | AUDIO | EDIT |
| LITERALS | | | LT2 | LT3 | LT4 | LT5..... |
| TOUCH | | | | | | |
| LINE 25 | | | | | | |
| SOUND | | | | | | |
| KEYBOARD INPUT | | | | | | |
| INDICATORS | | | | | | |
| MISCELLANEOUS | | | | | | |

```
                                           ┌──────────────────────────┐
                                           │ LITERALS         ·       │
                                           │     WDTH──ROW──COL        │
                                           │     [..]   3     5        │
                                           └──────────────────────────┘
```

PRESS F4 for LABEL                    LT5            F7=EVENT Names   F8=HELP

FIG. 7

OUTLINE for VISION

```
#E10  [Display VISION development menu ]
            Graphic - MENU1
            The menu has 3 choices
            1. "Media Types"      Go to E20
            2. "Creating a disc"     Go to E30
            3. "Quiz"  Go to E40
      #E20  [Media Types]
```

| TIME | 0 | .1 | .2 | .3 | .4 | .5 |
|---|---|---|---|---|---|---|
| VIDEO SEGMENT | | | | | | |
| VIDEO STILLS | | | | | | |
| GRAPHICS | MENU1 | | | | | |
| LITERALS | | | | | | |
| TOUCH | TC1..... | | | | | |
| LINE 25 | | | | | | |
| SOUND | | | | | | |
| KEYBOARD INPUT | | | | | | |
| INDICATORS | | | | | | |
| MISCELLANEOUS | | | | | | |

```
                                    ┌──────────────────────────────┐
                                    │ TOUCH SCREEN DESIGN          │
                                    │ Number of TOUCH AREAS[..]     │
                                    └──────────────────────────────┘
```

PRESS F4 for LABEL                    TC1            F7=EVENT Names   F8=HELP

FIG. 8

OUTLINE for VISION

1E20 [Media Types]
      Video with audio [15015 - 15500]
      Return to E10
  1E30 [Creating a Disc]
      Audio only [13746 - 14371]. Start with graphic ZOOM
    Graphic Frame Literal      / Graphic Frame Literal
     SCRIPT 13860  SCRIPT-STORYBOARD / EDIT    14138 VIDEO EDITING
NEXT EVENT=E10

| TIME | 0 | 16.21 | 16.3 | 16.4 | 16.5 | 16.6 |
|------|---|-------|------|------|------|------|
| VIDEO SEGMENT | 15015 | 15500 | | | | |
| VIDEO STILLS | | | | | | |
| GRAPHICS | CLEARLO | | | | | |
| LITERALS | | | | | | |
| TOUCH | | | | | | |
| LINE 25 | BR1..... | | | | | |
| SOUND | | | | | | |
| KEYBOARD INPUT | | | | | | |
| INDICATORS | | | | | | |
| MISCELLANEOUS | | | | | | |

LINE 25 SELECTIONS
PAUSE   [Y]
REPLAY   Y
NEXT EVNT ........
RTRN EVNT ........
HELP    Y

PRESS F4 for LABEL          BR1      F7=EVENT Names  F8=HELP

FIG. 9

OUTLINE for VISION

1E20 [Media Types]
      Video with audio [15015 - 15500]
      Return to E10
  1E30 [Creating a Disc]
      Audio only [13746 - 14371]. Start with graphic ZOOM
    Graphic Frame Literal      / Graphic Frame Literal
     SCRIPT 13860  SCRIPT-STORYBOARD / EDIT    14138 VIDEO EDITING
NEXT EVENT=E10

| TIME | 0 | 16.21 | 16.3 | 16.4 | 16.5 | 16.6 |
|------|---|-------|------|------|------|------|
| VIDEO SEGMENT | 15015 | 15500 | | | | |
| VIDEO STILLS | | | | | | |
| GRAPHICS | CLEARLO | | | | | |
| LITERALS | | | | | | |
| TOUCH | | | | | | |
| LINE 25 | BR1..... | | | | | |
| SOUND | | | | | | |
| KEYBOARD INPUT | | | | | | |
| INDICATORS | | | | | | |
| MISCELLANEOUS | | | | | | |

LINE 25 SELECTIONS
RESUME  [Y]
SLD FWD  Y
SLD REV  Y
STOP    Y
DETAIL  ........

PRESS F4 for LABEL          BR1      F7=EVENT Names  F8=HELP

FIG. 10

OUTLINE for VISION
————————

!E50  [Correct answer - Still / Still frame]
        Graphic - ZZZ - over still frame [15323]
        Transparent color = White
        Voice chip - "Bravo"
        Return to E10
    !E60  [Correct answer - Video / Motion video]
        Graphic - WALK - over video [4950 -5111]
NEXT EVENT=E10

| TIME | 0% | 3.1 | 3.2 | 3.3 | 3.4 | 3.5 |
|------|-----|-----|-----|-----|-----|-----|
| VIDEO SEGMENT | | | | | | |
| VIDEO STILLS | 15323 | | | | | |
| GRAPHICS | | | | | | |
| LITERALS | | | | | | |
| TOUCH | | | | | | |
| LINE 25 | | | | | | |
| SOUND | | | | | | |
| KEYBOARD INPUT | | | | | | |
| INDICATORS | | | | | | |
| MISCELLANEOUS | | | | | | |

SPEECH CHIP-ENTER WORDS to SPEAK

.................................................
.................................................

REVIEW WORD LIST (Y/N) [.]

SP3        F7=EVENT Names   F8=HELP

FIG. 11


OUTLINE for VISION
————————

!E50  [Correct answer - Still / Still frame]
        Graphic - ZZZ - over still frame [15323]
        Transparent color = White
        Voice chip - "Bravo"
        Return to E10
    !E60  [Correct answer - Video / Motion video]
        Graphic - WALK - over video [4950 -5111]
NEXT EVENT=E10

| TIME | 0% | 3.1 | 3.2 | 3.3 | 3.4 | 3.5 |
|------|-----|-----|-----|-----|-----|-----|
| VIDEO SEGMENT | | | | | | |
| VIDEO STILLS | 15323 | | | | | |
| GRAPHICS | | | | | | |
| LITERALS | | | | | | |
| TOUCH | | | | | | |
| LINE 25 | | | | | | |
| SOUND | | | | | | |
| KEYBOARD INPUT | | | | | | |
| INDICATORS | | | | | | |
| MISCELLANEOUS | | | | | | |

d

SPEECH CHIP-ENTER WORDS to SPEAK          danger

................................................   days
................................................   degrees
                                                  delta
                                                  device
                                                  direction
—————————————————————————————————— display

SP3        F7=EVENT Names   F8=HELP

FIG. 12

```
                        OUTLINE for VISION
                        ─────────────

    1E40  [Media Quiz]
              Graphic - QUIZ - with keyboard entry
                  ·  Possible answers:
                          "Still" or "Still Frame" - E50
                          "Video" or "Motion Video" - E60
                          "Audio" - E70
                          Else - E80
```

| TIME | 0: | 0 | .1 | .2 | .3 | .4 |
|------|----|----|----|----|----|----|

```
VIDEO SEGMENT
VIDEO STILLS   ┌──────────────────────────────────────────────┐
GRAPHICS       │ ENTER MATCH WORD or PHRASE        CORRECT BRANCH │
LITERALS       │   &STILL................................          E50  │
TOUCH          │   &VIDEO................................          E60  │
LINE 25        │   &AUDIO................................          E70  │
SOUND ·        │   ................................           ........ │
KEYBOARD INPUT │   ................................           ........ │
INDICATORS     │         ELSE =>[E80     ]                        │
MISCELLANEOUS  └──────────────────────────────────────────────┘

ENTER MATCH for VARIABLE            ANI          F7=EVENT Names   F8=HELP
```

FIG. 13

```
                        OUTLINE for VISION
                        ─────────────

    1E80  [Incorrect response]
              Check indicator 1
                  ON? - E90
                  OFF? - Turn on
                          Voice chip "Repeat"
                          Go to E40
    1E90  [Answer after 2 incorrect responses]
NEXT EVENT=E40
```

| TIME | 0: | .1 | .2 | .3 | .4 | .5 |
|------|----|----|----|----|----|----|

```
VIDEO SEGMENT                        ┌────────────────────────────┐
VIDEO STILLS                         │ INDICATOR TESTS            │
GRAPHICS                             │ SET      [IIIIIIYIIIIIIIII] │
LITERALS                             │ TEST     XIIIIIIIIIIIIIII  │
TOUCH                                │ OPERATOR  .               │
LINE 25                              │ VALUE     ..              │
SOUND            SP2                 │ POS BRNCH ........         │
KEYBOARD INPUT                       │ NEG BRNCH ........         │
INDICATORS  SW1  SW2.....            └────────────────────────────┘
MISCELLANEOUS

PRESS F4 for LABEL                  SW2         F7=EVENT Names   F8=HELP
```

FIG. 14

OUTLINE for VISION

_____

!E10  [Display VISION development menu ]
        Graphic - MENU1
        The menu has 3 choices
        1. "Media Types"     Go to E20
        2. "Creating a disc"    Go to E30
        3. "Quiz"  Go to E40
   !E20  [Media Types]

| TIME | 0! | 0 | .1 | .2 | .3 | .4 |
|------|-----|---|-----|-----|-----|-----|
| VIDEO SEGMENT | | | | | | |
| VIDEO STILLS | | | | | | |
| GRAPHICS | | | | | | |
| LITERALS | | | | | | |
| TOUCH | | | | | | |
| LINE 25 | | | | | | |
| SOUND | | | | | PLAYER   [.] | |
| KEYBOARD INPUT | | | | | PROMPTED  . | |
| INDICATORS | | | | | | |
| MISCELLANEOUS | LOAD  .. | | | | | |

ENTER KEYWORD                    LOAD        F7=EVENT Names    F8=HELP

FIG. 15

SAMPLE ENVIRONMENT
TIME
VIDEODISC. FRAME
VIDEODISC STATUS
KEYBOARD
TOUCHSCREEN

TIME LINE CONTROLLER

LOGIC ANALYZER EVENT LOGGING

DISPATCH STAGED COMMANDS

STAGING BUFFERS

STAGE COMMANDS

COMMAND QUEUE

PARSE EVENT FILE

EXECUTE EXTERNAL PROCESS

READ EVENT FILE

INPUT BUFFER

DISK

FIG. 16